Europäisches Patentamt

European Patent Office

Office européen des brevets

(11) Publication number: **0 113 871**
**B1**

(12) **EUROPEAN PATENT SPECIFICATION**

(45) Date of publication of patent specification: **04.05.88**

(51) Int. Cl.⁴: **F 16 L 37/24**

(21) Application number: **83112477.1**

(22) Date of filing: **12.12.83**

(54) Coupling.

(30) Priority: **15.12.82 US 450095**

(43) Date of publication of application:
**25.07.84 Bulletin 84/30**

(45) Publication of the grant of the patent:
**04.05.88 Bulletin 88/18**

(84) Designated Contracting States:
**CH DE GB IT LI NL**

(56) References cited:
**DE-A-2 006 115**
**DE-C- 866 276**
**DE-U-7 500 599**
**US-A-1 890 011**
**US-A-2 532 733**

(73) Proprietor: **Hohol, Larry**
**1 Penox Plaza Commerce Road**
**Pittston Pennsylvania 18640 (US)**

(72) Inventor: **Hohol, Larry**
**1 Penox Plaza Commerce Road**
**Pittston Pennsylvania 18640 (US)**

(74) Representative: **Goddar, Heinz J., Dr. et al**
**FORRESTER & BOEHMERT Widenmayerstrasse 4/I**
**D-8000 München 22 (DE)**

Courier Press, Leamington Spa, England.

## Description

The instant coupling relates generally to quickly and easily operated, yet secure, couplings between two hoses, or the like, which may carry a fluid or a gas. The instant coupling is of a bayonet type and is most often used for connecting air hoses, but need not be limited to air hoses.

Quick release and quick latching couplings of the bayonet type are well-known in the field of providing couplings between a pipe, tube or hose of an oxygen tank and a pipe, tube or hose leading to an apparatus which administers oxygen to a patient. Often it is necessary for the patient himself to couple and uncouple the oxygen hose to and from the administering apparatus. Because of the need to have a secure coupling to maintain the integrity of the oxygen path, such couplings are often difficult to operate. In fact, in most cases, the patients which use this type of coupling are elderly or feeble, thus making any difficulty encountered in coupling or uncoupling undesirable, if not unacceptable.

Many times, such problems occur when a weak or elderly patient tries to couple a normal bayonet-type coupling, by lining up the pin in one half of the coupling with the slot of the other half. This becomes difficult for some patients and for the weakest and most elderly it is often impossible.

The instant invention overcomes problems encountered in the known bayonet-type mount by allowing easier coupling of the male and female members.

The coupling of the instant invention comprises a generally cylindrical male member having a first and a second end, said first end being adapted for connection to a hose or the like, said male member also having one or more pins extending radially outward from the surface thereof; and a generally cylindrical female member adapted for cooperative engagement with said male member, said female member having a first end adapted for connection with a hose or the like and a second end having one or more slots each for accepting one of said pins of said male member, each of said slots extending from said second end, each slot having a locking recess, an opening, expanding toward said second end, a channel connecting said recess with said opening, said locking recess being adapted for compatibly receiving one of said pins, a lip being disposed adjacent said recess for maintaining said one pin within said recess upon coupling, said opening having sides extending outwardly from the sides of said channel to form an opening greater in width than said channel to facilitate the entry of said pin into the slot upon coupling.

There is a known coupling (cf. DE—A—2006115) of the kind referenced to before, but this coupling has a channel with curvilinear sides. Moreover, the channel is only a narrow transition between the opening and the locking recess. Furthermore, the sides of the opening of the known coupling are also curvilinear and there is a curved transition between the opening and the "channel".

When the known coupling is used by for example patients in a hospital or elderly or feeble people, it may happen that in inserting the female member in the male member both members are oscillating with respect to each other and thereby the pin or the pins are bumping accordingly against the sides of the opening and of the "channel" respectively, and the pin may easily slip out of the opening.

A further coupling is known from US—A—2 532 773. This known coupling lacks a channel as provided in the instant coupling. Rather the opening of this known coupling connects directly to the retaining lip and recess. For the reasons given before, also this known coupling could not therefore provide an improvement in operation especially for the persons concerned here.

Thus it is a technical problem to modify and to further develop the known coupling mentioned first in such a way, that it becomes even for patients in hospital, elderly or feeble people more possible and much easier to use such a coupling successfully.

A coupling according to the invention, solving this problem, is characterized by the fact that a portion of the channel extending between the opening and the lip has straight generally parallel sides disposed at an oblique angle with respect to the axis of the female member for guiding said one pin to said recess upon coupling, and that the sides of said opening are straight and diverge to form obtusive angles with the straight sides of said channel portion.

This configuration has the advantage that when the pin has been moved into the channel portion on coupling it cannot freely slip back out of the opening without the patient feeling some resistance.

Brief Description of the Drawings

Fig. 1 is a perspective view of the male and female members of the instant coupling.

Fig. 2 is a cross-sectional view of the female member of the coupling as shown in Fig. 1.

Fig. 3 is a cross-sectional view of the male member of the coupling as shown in Fig. 1.

Detailed Description of the Invention

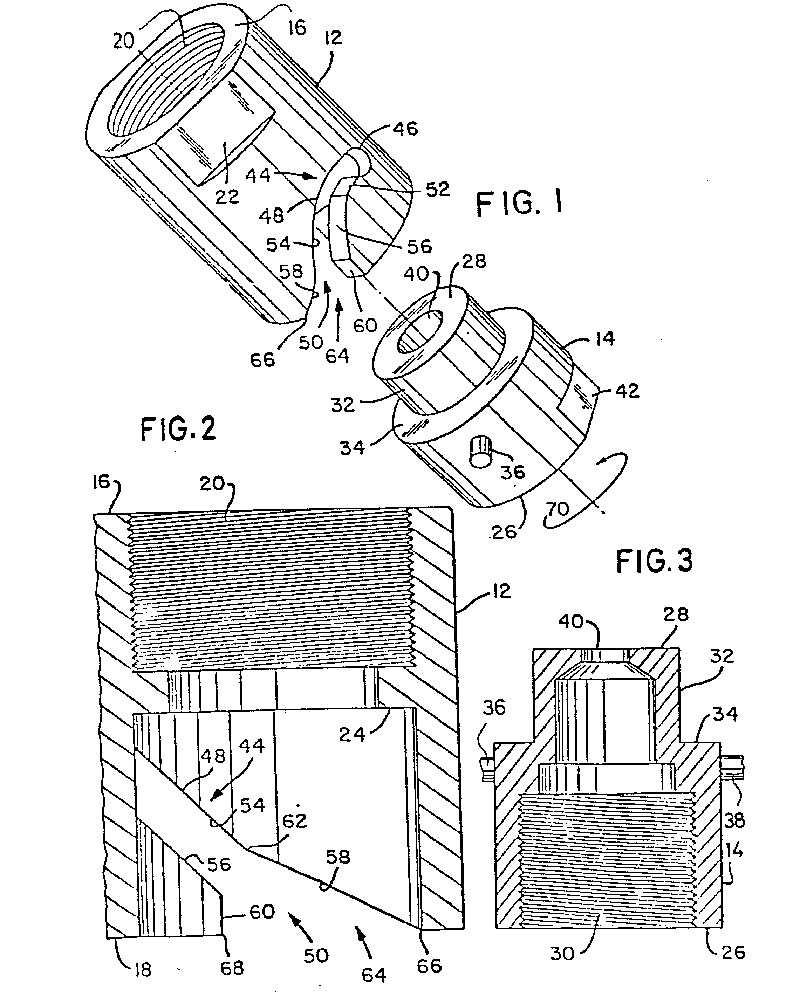

As best seen in Fig. 1 the coupling 10 according to the instant invention has a generally cylindrical female member 12 and a generally cylindrical male member 14. Female member 12 has one end 16 and a second end 18. The interior of the one end 16 has threads 20 for connection with a suitably threaded pipe, tube, hose or the like (not shown). Opposing flat faces 22 are provided near end 16 to allow the gripping by a wrench or some other tool for facilitating the connection of female member 12 with a pipe, tube, hose or the like (not shown). As seen in Fig. 2 an annular shoulder 24 is provided extending inwardly from the interior of member 12 to provide a support for gaskets or washers (not shown) to be positioned on either side thereof.

As shown in Figs. 1 and 3 male member 14 has a first end 26 and a second end 28, male member 14 is provided with threads 30 on its interior near end 26 for connecting with complimentary threads of a pipe, tube, hose or the like (not shown). Cylindrical male member 14 also has a smaller cylindrical portion 32 adjacent end 28, thus forming an annular shoulder 34. A pair of opposing pins 36 and 38 extend radially outward from the surface of cylindrical male member 14 near shoulder 34, spaced toward end 26. Aperture 40 is provided in member 14 to allow the flow of gas or liquid therethrough. Additionally, opposing flat faces 42 are provided adjacent end 26 as gripping points for a wrench or some other tool for facilitating the connection of male member 14 with a threaded pipe, tube, hose or the like (not shown).

Female member 12 is provided with opposing slots 44 (one on each side of member 12) for engagement with pins 36, 38 of male member 14 upon coupling. As shown in Fig. 1 and Fig. 2, slots 44 are comprised of locking recess 46, channel 48, and opening 50. Locking recess 46 is shaped for compatible engagement with pin 36 or 38. Lip 52 is provided between recess 46 and channel 44 for maintaining pin 36 or 38 in the recess 46 upon coupling of the two members. Channel 48 which connects locking recess 46 with opening 50 has sides 54 and 56. These sides are generally parallel with each other for guiding pin 36 or 38 from opening 50 to locking recess 46. Sides 54 and 56 are spaced apart a distance slightly greater than the diameter of pins 36 and 38 for easy movement of the pins there through without a great amount of free play. Opening 50 is composed of sides 58 and 60. Sides 58 and 60 each extend outwardly, at an angle, from the general direction of the sides 54 and 56 of channel 48. Sides 58 and 60 are nearest each other at a point 62 which marks the transition from channel 48 to opening 50. From this near point 62, the sides 58 and 60 extend outwardly to form an ever-increasingly wider opening, substantially larger at its mouth 64, as bounded by points 66 and 68 than at point 62. Mouth 64 is substantially wider than the width of channel 48.

In operation, female member 12 is connected by threads 20 to pipe, tube, hose or the like and male member 14 is threadably connected by threads 30 to another pipe, tube, hose or the like (not shown). As a user proceeds to connect female member 12 with male member 14, the most difficult task is to properly align pins 36 and 38 with slots 44 to couple the two members. Usually, each member would be grasped in a hand of the patient connecting it. As female member 12 is engaged with male member 14, member 14 is rotated until pins 36 and 38 register with mouth 64 of opening 50. This relative rotation may be either clockwise or counter-clockwise to establish the registration of pins 36 and 38 with slots 44. As female member 12 and male member 14 are engaged by a pushing together and causing male member 14 to rotate in the direction of arrow 70 with respect to female member 12, pins 36 and 38 are guided from opening 50 into channel 48 and from there into locking recess 46 thereby forming a secure coupling. The width of mouth 64 is ideally more than twice the width of channel 48 (but need not necessarily be twice the size, but for proper functioning it must be larger) thereby making it much simpler for aged or weak patients to find the registration of pins 36 and 38 with slots 44 and couple the two members together.

## Claims

1. A coupling, comprising:

a generally cylindrical male member (14) having a first and a second end (26, 28), said first end (26) being adapted for connection to a hose or the like, said male member also having one or more pins (36, 38) extending radially outward from the surface thereof; and

a generally cylindrical female member (12) adapted for cooperative engagement with said male member, said female member having a first end adapted for connection with a hose or the like and a second end (18) having one or more slots (44) each for accepting one of said pins of said male member,

each of said slots extending from said second end (18), each slot having

a locking recess (46),

an opening (50), expanding toward said second end,

a channel (48) connecting said recess with said opening,

said locking recess being adapted for compatibly receiving one of said pins, a lip (52) being disposed adjacent said recess for maintaining said one pin within said recess upon coupling, said opening having sides (58, 60) extending outwardly from the sides of said channel to form an opening greater in width than said channel to facilitate the entry of said pin into the slot upon coupling, characterized in

that a portion of the channel extending between the opening (50) and the lip (52) has straight generally parallel sides (54, 56) disposed at an oblique angle with respect to the axis of the female member for guiding said one pin to said recess upon coupling, and

that the sides (58, 60) of said opening are straight and diverge to form obtuse angles with the straight sides (54, 56) of said channel portion.

2. The coupling of claim 1, wherein said male member has a shoulder (34) formed along its outside surface and said female member has shoulder (24) formed along its inside surface for supporting a gasket disposed between said two shoulders when coupled.

## Patentansprüche

1. Kupplung,

— mit einem im wesentlichen zylindrischen Steckerstück (14) mit einem ersten und einem zweiten Ende (26, 28), wobei das erste Ende (26) zur Verbindung mit einem Schlauch oder dergleichen ausgebildet ist und einen oder mehrere Stifte (36, 38) aufweist, die sich radial von dessen Fläche nach außen erstrecken, und

— mit einem im wesentlichen zylindrischen, zur Aufnahme des Steckerstücks ausgebildeten Buchsenstück (12), wobei das Buchsenstück mit einem zur Verbindung mit einem Schlauch oder dergleichen ausgebildeten ersten Ende und einem mit einem oder mehreren Schlitzen (44) zur Aufnahme von jeweils einem der Stifte des Steckerstücks versehenen zweiten Ende (18),

— wobei jeder der sich von dem zweiten Ende (18) erstreckenden Schlitze versehen ist

— mit einem Verriegelungskern (46),

— mit einer sich von dem zweiten Ende erweiternden Öffnung (50), und

— mit einem die Kerbe mit der Öffnung verbindenden Kanal,

— und wobei die Verriegelungskerbe zur kompatiblen Aufnahme eines der Stifte ausgebildet ist, eine Lippe benachbart der Kerbe zum Halten des Stiftes in der Kerbe bei dem Kuppeln angeordnet ist, die Öffnung mit sich von der Fläche des Kanals nach außen erstreckenden Flächen (58, 60) versehen ist zur Bildung einer Öffnung, deren Breite zur Erleichterung des Eintritts des Stiftes in den Schlitz bei dem Kuppeln größer ist als die des Kanals,

dadurch gekennzeichnet,

— daß ein sich zwischen der Öffnung (50) und der Lippe (52) erstreckender Abschnitt des Kanals gestreckte, im wesentlichen parallele Flächen (54, 56) aufweist, die in einem geneigten Winkel in Bezug auf die Achse des Buchsenstücks ausgerichtet sind zur Führung des einen Stiftes zu der Kerbe bei dem Kuppeln, und

— die Seiten (58, 60) der Öffnung gestreckt sind und divergieren unter Ausbildung von stumpfen Winkeln mit den gestreckten Flächen (54, 56) des Kanalabschnitts.

2. Kupplung nach Anspruch 1, wobei das Steckerstück eine Schulter (34) aufweist, die entlang der äußeren Fläche ausgebildet ist und daß das Buchsenstück eine Schulter (24) aufweist, die entlang seiner Innenfläche ausgebildet ist zum Tragen einer bei Kupplung zwischen den beiden Schultern liegenden Dichtung.

## Revendications

1. Accouplement comprenant un élément mâle (14) de forme générale cylindrique, ayant deux extrémités (26, 28), la première (26) étant agencée pour être raccordée à un tuyau ou analogue, ledit élément mâle possédant aussi un ou plusieurs tétons (36, 38) faissant saillie radialement de la surface de celui-ci, et un élément femelle (12) de forme générale cylindrique, agencé pour coopérer par engagement avec ledit élément mâle, ledit élément femelle possédant une première extrémité agencée pour se raccorder à un tuyau ou analogue et une seconde extrémité (18) présentant une ou plusieurs rainures (44) pour accepter chacune un des dits tétons du dit élément mâle, chacune de ces rainures partant de ladite seconde extrémité (18), chaque rainure ayant un logement de verrouillage (46), une ouverture (50) s'évasant en direction de ladite seconde extrémité, un conduit (48) reliant ledit logement à ladite ouverture, ledit logement de verrouillage étant agencé pour recevoir de façon compatible un des dits tétons, une lèvre (52) étant située adjacente audit logement pour maintenir ledit téton dans ledit logement lors de l'accouplement, ladite ouverture possédant des faces (58, 60) qui s'écartent vers l'extrémité des faces du dit conduit pour former un orifice de plus grande largeur que ladite conduit et faciliter ainsi l'entrée dudit téton dans la rainure lors de l'accouplement, caractérisé par le fait qu'une portion du conduit s'étendant entre l'ouverture (50) et la lèvre (52) possède des faces droites généralement parallèles (54, 56) faisant un angle oblique par rapport à l'axe de l'élément femelle pour guider ledit téton jusqu'au dit logement lors de l'accouplement, et les faces (58, 60) de ladite ouverture sont droites et divergent pour former des angles obtus avec les faces droites (54, 56) de ladite portion de conduit.

2. Accouplement selon la revendication 1, dans lequel ledit élément mâle présente un épaulement (34) formé le long de sa surface extérieure et ledit élément femelle présente un épaulement (24) formé le long de sa surface intérieure pour supporter un joint disposé entre les deux dits épaulements quand ils sont accouplés.

FIG. 1

FIG.2

FIG.3